# EUROPEAN PATENT SPECIFICATION

(11) **EP 2 431 195 B1**
(45) Date of publication and mention of the grant of the patent: **30.07.2014**
(21) Application number: 11181390.3
(22) Date of filing: 15.09.2011
(51) Int. Cl.: B60C 9/00, D06M 14/30, B60C 9/22

(54) **Tire and method for making a tire or tire component**
Reifen und Verfahren zur Herstellung eines Reifens oder einer Reifenkomponente
Pneu et procédé de fabrication d'un pneu ou composant de pneu

(30) Priority: 20.09.2010 US 885899
(43) Date of publication of application: 21.03.2012
(73) Proprietor: The Goodyear Tire & Rubber Company, Akron, OH 44316-0001 (US)
(72) Inventor: Imhoff, Serge Julien Auguste, L-9184 Schrondweiler (LU); Siffer, Frederic Gerard Auguste, Akron, OH Ohio 44313 (US); Gillick, James Gregory, Akron, OH Ohio 44313 (US)
(74) Representative: Kutsch, Bernd

(56) References cited:
- EP-A1- 2 371 882
- EP-A2- 0 346 055
- US-A- 5 041 304
- US-A- 5 284 543
- US-A- 5 399 832
- US-A- 6 096 156
- US-A1- 2004 159 382
- US-B1- 6 425 426

## Description

### Field of Invention

This invention relates to a pneumatic tire and, in particular, to high performance automobile and motorcycle tires, and to a method of manufacturing a tire or a tire component.

### Background of the Invention

Conventional motorcycle tires utilize very wide treads which, in transverse cross-section, are sharply curved to provide good contact with the road surface when the motorcycle is steeply banked in cornering. Maintenance of a consistent ground contact area or 'tire footprint' under all conditions is a major factor in determining general vehicle handling. Of particular importance in race motorcycle tires of radial construction is a characteristic of high cornering power with stability to maximize cornering speeds under race conditions.

Conventional radial motorcycle race tires have short sidewalls which extend to the tread edges radially and axially outwardly from the tires beads. The beads provide engagement to the wheel rim on tapered bead seats. The sidewalls are reinforced by radial carcass plies which, when tensioned by the inflation pressure, act together with sidewall geometry to provide a fixed location for the curved tread regions to withstand cornering forces.

The sharply curved tread region of the conventional tire may be specially reinforced by a reinforcing breaker to give the required structural rigidity to allow for banking over of the motorcycle when cornering while also providing sufficient flexibility to allow localized tread flattening in the ground contact patch for good road grip.

A conventional motorcycle race tire may use a center hard tread compound and differing shoulder tread compounds since some race circuits necessitate uneven shoulder wear and grip.

Conventional processes for producing tires involve an extrusion or calendering step which increase production cost and which may increase scrap. Any new and innovative manner of producing tires with reduced cost would be commercially desirable.

Rubber as used in tires is typically reinforced with various embodiments of textile, glass or steel fibers to provide basic strength, shape, stability, and resistance to bruises, fatigue, and heat. These fibers may be twisted into plies and cabled into cords. Rubber tires of various construction can be prepared using such cords.

Manufacturers of rubber reinforced articles have long realized the importance of the interfacial adhesion of reinforcement of its rubber environment. Specialized coatings such as resorcinol/formaldehyde latex adhesives for polymeric cords and brass plating for steel cords are typically applied to fiber and wire reinforcements to enable them to function effectively for tire use. In addition, the compounds used to coat these reinforcements are usually specially formulated to develop adhesion. For example, many tire manufacturers use various cobalt salts as bonding promoters in their steel cord wire coats. The bonding promoters are added through compounding. To achieve a maximum bonding strength, excessive amounts of cobalt salt are added to the wire coat. Since only a very small portion of the cobalt salt was engaged in the rubber-metal interfacial bonding reaction, most of the cobalt salts remained in the compound as excess cobalt without any contribution to the bonding. Cobalt is expensive and may even cause aging problems of the rubber when used in excess.

It continuously remains desirable to improve adhesion of tire cords to rubber while simultaneously improving the properties of the coat compounds and reducing their cost.

EP-A- 2 371 882, which is published only after the priority date of this application, describes a method of treating a tire cord comprising the steps of providing an atomized mixture of a polymerizable monomer, a halogenated hydrocarbon and a carrier gas, generating an atmospheric pressure plasma using this mixture and exposing the cord to this plasma.

US-A- 2004/0159382 and US-B1- 6,425,426 each describe the application of tire cords individually to a tire component.

US-A- 6,096,156 describes a method of promoting the adhesion of textiles to tire compounds through a vinyl compound plasma pre-treatment procedure.

US-A- 5,284,543 describes a method of preparing a rubber-based composite material by joining a base material and a rubber composition together by heat pressure bonding. Prior to the heat pressure bonding, a polymerized film having unsaturated bonds is generated on the surface of the base material using a low-pressure glow discharge plasma technique.

### Definitions

The following definitions are controlling for the disclosed invention.

"Aspect ratio" means the ratio of its section height to its section width.

"Axial" and "axially" are used herein to refer to lines or directions that are parallel to the axis of rotation of the tire.

"Circumferential" means lines or directions extending along the perimeter of the surface of the annular tire parallel to the Equatorial Plane (EP) and perpendicular to the axial direction.

"Cord" means one or more twisted or untwisted yarns such as an assembly of a plurality of twisted yarns. "Cords" may also be referred to as one of the reinforcement strands which the plies of the tire comprise.

"Cord angle" means the acute angle, left or right in a plan view of the tire, formed by a cord with respect to the equatorial plane. The "cord angle" is measured in a cured but uninflated tire.

"Denier" means the weight in grams per 9000 meters (unit for expressing linear density). Dtex means the weight in grams per 10,000 meters.

"Fiber" is a unit of matter, either natural or man-made that forms the basic element of filaments having a length at least 100 times its diameter or width.

"Filament count" means the number of filaments that make up a yarn. Example: 1000 denier polyester has approximately 190 filaments.

"LASE" is load at specified elongation.

"Lay length" means the distance at which a twisted filament or strand travels to make a 360 degree rotation about another filament or strand.

"Radial" and "radially" are used to mean directions radially toward or away from the axis of rotation of the tire.

"Tenacity" is stress expressed as force per unit linear density of the unstrained specimen (gm/tex or gm/denier).

"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

### Summary of Invention

The present invention is directed to a tire in accordance with claim 1, preferably a pneumatic tire, comprising a tire component having a plurality of individually plasma treated steel cords applied individually to the tire component, wherein the plasma treated steel cords comprise a plasma generated deposition derived from at least one polymerizable monomer.

The invention is further directed to a method of manufacturing a tire or a tire component in accordance with claim 6, the method comprising the steps of:
i) atomizing a mixture of at least one polymerizable monomer, a halogenated hydrocarbon, and a carrier gas to form an atomized mixture;
ii) generating an atmospheric pressure plasma from the atomized mixture;
iii) exposing an individual tire cord to the atmospheric pressure plasma to make a plasma treated cord; and
iv) applying the plasma treated individual cord on a surface of an uncured tire component.

Dependent claims refer to preferred embodiments of the invention.

In one preferred aspect of the invention, the atmospheric pressure plasma is generated by dielectric barrier discharge.

In another preferred aspect of the invention, the carrier gas is selected from the group consisting of argon, helium, neon, xenon, oxygen, nitrogen, and carbon dioxide.

In another preferred aspect of the invention, the at least one polymerizable monomer is selected from the group consisting of isoprene, butadiene, squalene, and styrene.

The tire in accordance with the invention is preferably a pneumatic tire, more preferably a motorcycle tire, a motorcycle race tire, a passenger tire or a passenger race tire.

### Brief Description of the Drawings

Further aspects of the present invention will become apparent from the description of the following embodiments in conjunction with the attached diagrammatic drawing in which:
FIG. 1 is a schematic representation of an example motorcycle tire for use with the present invention.
FIG. 2 is a schematic representation of tire cord treatment process of the present invention.

### Description

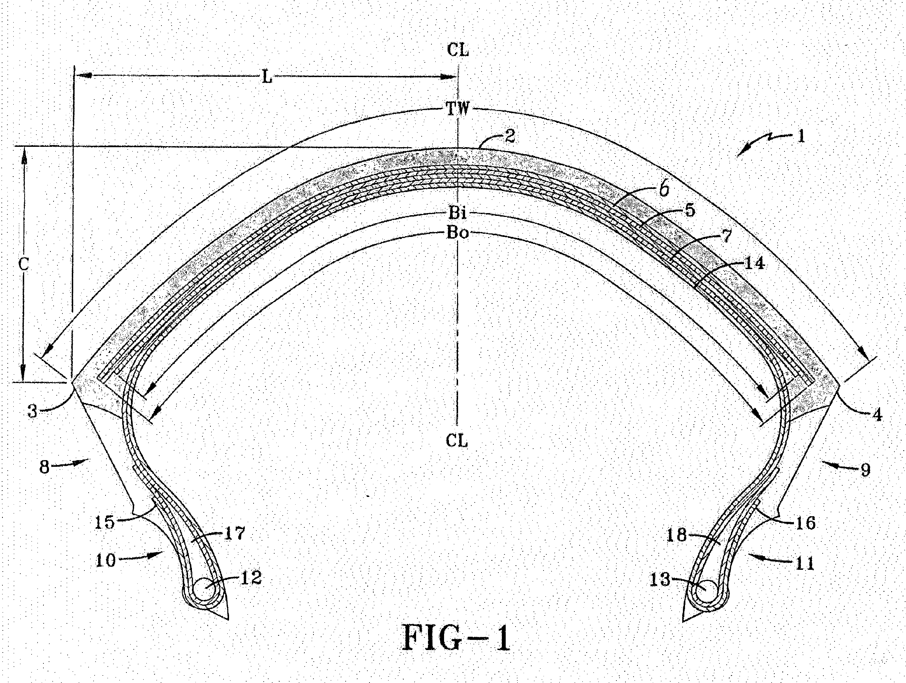

The example motorcycle tire 1 of FIG. 1 includes a pair of sidewalls 8, 9 terminating in bead regions 10, 11. Each bead region 10, 11 is reinforced by an inextensible annular bead core 12, 13. Extending between each bead region 12, 13 is a tire carcass reinforcement ply structure 14 of one or more plies which is/are anchored in each bead region by being turned around each respective bead core 12, 13 laterally from inside to outside to form each ply turn-up 15, 16. The carcass reinforcement ply structure 14 may, for example, comprise a single ply of nylon fabric cords oriented substantially in a radial direction. Each bead region 10, 11 may further comprise a hard rubber apex member 17, 18 anchored to each respective bead core 12, 13 and narrowing/tapering radially outward.

The carcass ply fabric of the example tire 1 may also comprise polyester, rayon, nylon, or para-aramid cords. Further, while a single ply carcass of cords at substantially 90 degrees may be particularly advantageous in the case of tires for the rear wheel of a motorcycle, for the front wheel, a motorcycle tire with two plies of cords crossed at an angle of 70-88 degrees may be utilized.

The example tire 1 may have a camber value of 0.6 and a convex tread region 2, having tread edges 3, 4 reinforced by a breaker assembly (or belt structure) and an overlay 6 in accordance with the present invention. The width TW of the tread may be 220 mm measured along the outer surface. The breaker assembly may comprise zero, one, or two breaker plies 5, 7. As an example, the breaker ply or plies 5, 7 may comprise para-aramid cord tire fabric or other suitable material and construction, such as a steel monofilament ply.

In the example tire 1 of FIG. 1, the cords in the two breaker plies 5, 7 may be oppositely inclined to each other at an angle of 25 degrees to the circumferential direction of the tire. The radially inner breaker ply 7 may have a width Bᵢ of 200 mm and may be narrower than the radially outer breaker ply 5, which may have a width Bₒ of 220 mm. The breaker plies 5, 7 may also comprise steel cords.

The tire cords of any of the various components of the tire, including but not limited to the belt structure (i.e., breaker), a carcass, an overlay, an undertread or a tread cushion layer may be treated using a plasma coating process, which includes the steps of
i) atomizing a mixture of at least one polymerizable monomer, a halogenated hydrocarbon, and a carrier gas to form an atomized mixture;
ii) generating an atmospheric pressure plasma from the atomized mixture; and
iii) exposing the tire cord to the atmospheric pressure plasma under conditions suitable to form a polymer strongly bonded to the tire cord and capable of bonding to rubber. Such tire cords may be made from any materials known in the art as suitable for tire cords, including steel, aramid, PEN, PET, PVA, PBO, POK, rayon, nylon, carbon, and glass fiber.

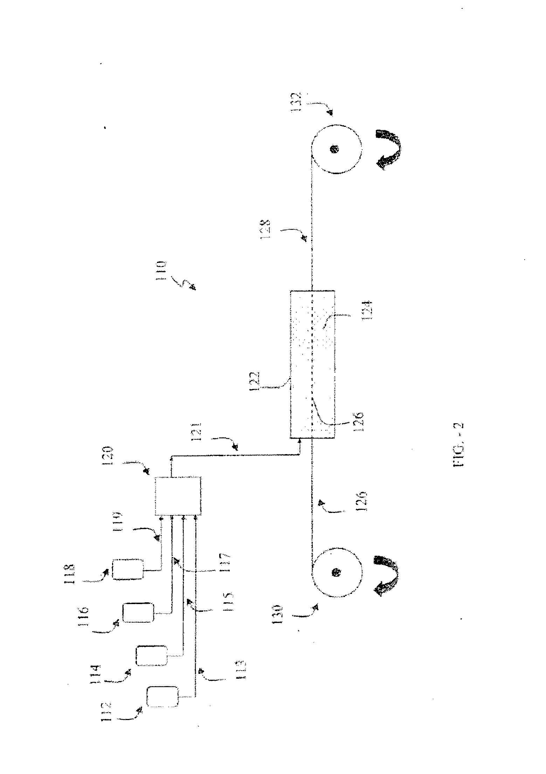

With reference now to FIG. 2, one embodiment of a method of treating a tire cord according to the present invention is illustrated. In the process 110, carrier gas 113 is fed from storage vessel 112 to atomizer 120 along with monomer 115 from storage vessel 114, halogenated saturated hydrocarbon 117 from storage vessel 116. Optionally, one or more curatives 119 may be added from storage vessel 118. Carrier gas 113, monomer 115, halogenated saturated hydrocarbon 117 and optional curative 119 are atomized in atomizer 120 to form atomized mixture 121. Atomized mixture 121 is sent to plasma generator 122, where atmospheric plasma 124 is generated from atomized mixture 121. Tire cord 126 is unwound from spool 130 and conveyed through plasma generator 122 and atmospheric plasma 124 for deposition of a surface treatment by the plasma 124. Treated tire cord 128 exits plasma generator 122 and is wound onto spool 132 for storage.

The plasma generator may be any suitable plasma generation device as are known in the art to generate atmospheric pressure plasmas, such as atmospheric pressure plasma jet, atmospheric pressure microwave glow discharge, atmospheric pressure glow discharge, and atmospheric dielectric barrier discharge. In one embodiment, the plasma generator is of the dielectric barrier discharge type. The dielectric barrier discharge apparatus generally includes two electrodes with a dielectric-insulating layer disposed between the electrodes and operate at about atmospheric pressures. The dielectric barrier discharge apparatus does not provide one single plasma discharge, but instead provides a series of short-lived, self terminating arcs, which on a long time scale (greater than a microsecond), appears as a stable, continuous, and homogeneous plasma. The dielectric layer serves to ensure termination of the arc. Further reference is made to US-B- 6,664,737 for its teaching regarding the operation of a dielectric barrier discharge apparatus.

By atmospheric pressure plasma, it is meant that the pressure of the plasma is preferably equal to or slightly above the ambient pressure of the surroundings. The pressure of the plasma may be somewhat higher than ambient, such that the plasma pressure is sufficient to induce the desired flow rate through the atomizer and plasma generator.

The atomized mixture includes a carrier gas, at least one monomer, and a halogenated hydrocarbon.

Suitable carrier gas includes any of the noble gases including helium, argon, xenon, and neon. Also suitable as carrier gas are hydrogen, nitrogen, nitrous oxide, and carbon dioxide. In one embodiment, the carrier gas is argon. Blends of gases can also be used such as argon blended with one or more of nitrogen, carbon dioxide, helium or nitrous oxide where argon is the main gas and the one or more other gases is blended in the argon stream in amounts between 0 - 5000 ppm such as between 500 ppm and 3000 ppm; or a blend of nitrogen with one or more of carbon dioxide, helium, and nitrous oxide where nitrogen is the main gas and the one or more other gases is blended in the nitrogen stream in amounts between 0 - 5000 ppm shc as between 500 ppm and 3000 ppm.

Suitable monomers include any of the various monomers used to produce elastomers for use in tires. Such monomers include conjugated diolefin monomers and vinyl aromatic monomers. The conjugated diolefin monomers generally contain from 4 to 12 carbon atoms. In particular 1,3-butadiene and isoprene may be used. Some additional conjugated diolefin monomers that can be utilized include 2,3-dimethyl-1,3-butadiene, piperylene, 3-butyl-1,3-octadiene, 2-phenyl-1,3-butadiene, and the like, alone or in admixture.

Further suitable are short chain length oligomers of polybutadiene and polyisoprene. Also suitable is squalene.

Some further representative examples of ethylenically unsaturated monomers that can potentially be used include alkyl acrylates, such as methyl acrylate, ethyl acrylate, butyl acrylate, methyl methacrylate and the like; vinylidene monomers having one or more terminal CH2=CH-- groups; vinyl aromatics such as styrene, α -methylstyrene, bromostyrene, chlorostyrene, fluorostyrene and the like; α -olefins such as ethylene, propylene, 1-butene and the like; vinyl halides, such as vinylbromide, chloroethane (vinylchloride), vinylfluoride, vinyliodide, 1,2-dibromoethene, 1,1-dichloroethene (vinylidene chloride), 1,2-dichloroethene and the like; vinyl esters, such as vinyl acetate; α.,β-olefinically unsaturated nitriles, such as acrylonitrile and methacrylonitrile; α.,β -olefinically unsaturated amides, such as acrylamide, N-methyl acrylamide, N,N-dimethylacrylamide, methacrylamide and the like.

Vinyl aromatic monomers are another group of ethylenically unsaturated monomers which may be used. Such vinyl aromatic monomers typically contain from 8 to 20 carbon atoms. Usually, the vinyl aromatic monomer will contain from 8 to 14 carbon atoms. In one embodiment the vinyl aromatic monomer is styrene. Some examples of vinyl aromatic monomers that can be utilized include styrene, 1-vinylnaphthalene, 2-vinylnaphthalene, α -methylstyrene, 4-phenylstyrene, 3-methylstyrene and the like.

The amount of monomer may be expressed as a percent of the total components in the atomized mixture excluding the carrier gas, i.e. on a carrier gas free basis. In one embodiment, the amount of monomer ranges from 10 to 50 percent by weight of the total components in the atomized mixture on a carrier gas free basis. In one embodiment, the amount of monomer ranges from 20 to 40 percent by weight of the total components in the atomized mixture on a carrier gas free basis.

The atomized mixture also contains a halogenated hydrocarbon. Suitable halogenated hydrocarbon includes for example dichloromethane (methylene chloride). Other examples include trichloromethane (chloroform), carbon tetrachloride, trichloroethane, chlorobutane, bromoethane, dibromomethane (methylene bromide), tribromomethane (bromoform), and the like; as well as allyl bromide, allyl chloride, chlorinated isoprene, dichloro butene, dichloro propene, dichloro butyne, chlorobutene, 1-chloro-3-methyl-2-butene, 1-chloro-2-methylpropene, 1-chloro-2-octyne, and the like.

The amount of halogenated hydrocarbon may be expressed as a percent of the total components in the atomized mixture with the exception of the carrier gas, i.e., on a carrier gas free basis. In one embodiment, the amount of halogenated hydrocarbon ranges from 90 to 50 percent by weight of the total components in the atomized mixture on a carrier gas free basis. In one embodiment, the amount of halogenated hydrocarbon ranges from 80 to 60 percent by weight of the total components in the atomized mixture on a carrier gas free basis.

Optionally, the atomized mixture may include at least one curative, such as sulfur donors and accelerators. Examples of suitable curatives include sulfur vulcanizing agents such as elemental sulfur (free sulfur) or sulfur donating vulcanizing agents, for example, an amine disulfide, polymeric polysulfide, dialkyl polysulfides, alkyl thiols or sulfur olefin adducts. Alternatively, curatives may be absent from the material deposited on the tire cord from the atmospheric plasma. In this case, curatives present in a rubber composition contacted with the tire cord may serve to cure the deposited material via migration of the curatives from the rubber composition to the material deposited on the cord prior to cure. When used in the atomized mixture, curatives may be present in an amount ranging from 0.5 to 10 percent by weight on a carrier gas free basis.

The tire cord is constructed of any of the various reinforcement materials commonly used in tires. In one embodiment, the tire cord includes steel and polymeric cords. Polymeric cords may include any of the various textile cords as are known in the art, including but not limited to cords constructed from polyamide (nylon), polyester (PEN and PET), polyketone (POK), rayon, and polyaramid.

The tire cord is exposed to the atmospheric plasma for a time sufficient to deposit an adhesively effect amount of polymerized or partially polymerized monomer onto the cord surface. The plasma treated cords thereby comprise a plasma generated deposition derived from at least one polymerizable monomer. By adhesively effective amount, it is meant that the treated cord will show increased adhesion to a cured rubber compound as measured by a standard adhesion test, such as ASTM Standard D2229-73. Generally, the exposure time required will depend on the concentration of monomer in the atomized mixture, the flow rate of atomized mixture into the plasma generator, and the power input to the plasma generator. For a batch process wherein stationary cord is exposed to an atmospheric plasma, the cord is exposed for from 1 to 100 seconds such as from 3 to 20 seconds. In a continuous process, the exposure time may be characterized by a residence time expressed as the cord path length (e.g. in centimeters) through the plasma generator divided by the cord transit rate (e.g. in cm/sec). The residence time in such a continuous process would then range from 1 to 100 seconds such as from 3 to 20 seconds.

The flow rate of atomized mixture into the plasma generator necessary to obtain an adhesively effective amount of polymerized or partially polymerized monomer onto the cord surface will depend on the desired face velocity in the plasma generator, i.e., the gas velocity (e.g. in cm/sec) passing perpendicular to a characteristic internal cross-sectional area of the plasma generator.

It is readily understood by those having skill in the art that the rubber compositions used in tire components would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The rubber compound may contain various conventional rubber additives. In one embodiment, the addition of carbon black comprises 10 to 200 parts by weight of diene rubber (phr). In another embodiment, from 20 to 100 phr of carbon black is used.

A number of commercially available carbon blacks may be used. Included in the list of carbon blacks are those known under the ASTM designations N299, N315, N326, N330, M332, N339, N343, N347, N351, N358, N375, N539, N550 and N582. Such processing aids may be present and can include, for example, aromatic, naphthenic, and/or paraffinic processing oils, as well as low PCA type oils including MES, TDAE, heavy naphthenic, RAE, and SRAE oils. Typical amounts of tackifying resins, such as phenolic tackifiers, range from 1 to 3 phr. Silica, if used, may be used in an amount of 5 to 100 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine, polymerized 1,2-dihydro-2,2,4-trimethylquinoline and others, such as, for example, those disclosed in the Vanderbilt Rubber Handbook (1990), Pages 343 through 362. Typical amounts of antiozonants comprise 1 to 5 phr. Representative antiozonants may be, for example, those disclosed in the Vanderbilt Rubber Handbook (1990), pages 363 through 367. Typical amounts of fatty acids, if used, which can include stearic acid comprise 0.5 to 3 phr. Typical amounts of zinc oxide comprise 2 to 10 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide, dialkyl polysulfides, alkyl thiols or sulfur olefin adducts. In one embodiment, the sulfur vulcanizing agent is elemental sulfur. One advantage of the present invention is the ability to use a relatively low sulfur content. In one embodiment, sulfur vulcanizing agents are used in an amount ranging from 0.5 to 8 phr.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.5 phr. In another embodiment, combinations of two or more accelerators may be used, including a primary accelerator which is generally used in the larger amount (0.5 to 2.0 phr), and a secondary accelerator which is generally used in smaller amounts (0.05 to 0.50 phr) in order to activate and to improve the properties of the vulcanizate. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. In another embodiment, if a second accelerator is used, the secondary accelerator may be a guanidine, dithiocarbamate or thiuram compound.

The rubber compound may contain any of the cobalt materials known in the art to further promote the adhesion of rubber to metal in the case of the use of steel tire cords. One advantage of the present invention is the reduction and possible elimination of cobalt compounds. However, it may be desirable to have some amounts that are present. Thus, suitable cobalt materials which may be employed include cobalt salts of fatty acids such as stearic, palmitic, oleic, linoleic and the like; cobalt salts of aliphatic or alicyclic carboxylic acids having from 6 to 30 carbon atoms, such as cobalt neodecanoate; cobalt chloride, cobalt naphthenate; cobalt carboxylate and an organo-cobalt-boron complex commercially available under the designation Manobond C from Wyrough and Loser, Inc, Trenton, New Jersey. Manobond C is believed to have the structure: 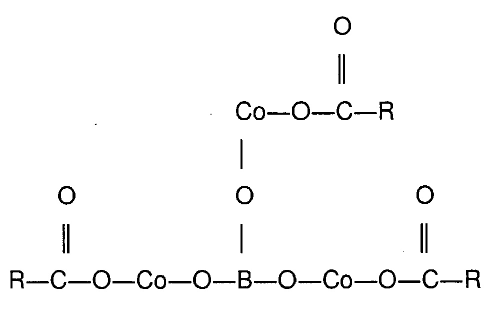 in which R is an alkyl group having from 9 to 12 carbon atoms.

Amounts of cobalt compound which may be employed depend upon the specific nature of the cobalt material selected, particularly the amount of cobalt metal present in the compound.

In one embodiment, the rubber composition is exclusive of cobalt compounds. In one embodiment, the amount of the cobalt material may range from 0.2 to 5 phr. In another embodiment, the amount of cobalt compound may range from 0.5 to 3 phr. In one embodiment, the amount of cobalt material present in the stock composition is sufficient to provide from 0.01 percent to 0.50 percent by weight of cobalt metal based upon total weight of the rubber stock composition. In another embodiment, the amount of cobalt material present in the stock composition is sufficient to provide from 0.03 percent to 0.2 percent by weight of cobalt metal based on total weight of wire coat composition.

The tire containing the tire component can be built, shaped, molded and cured by various methods which will be readily apparent to those having skill in such art.

A tire component of plasma treated cords in accordance with the present invention produces excellent handling performance of a tire, as well as reduced manufacturing cost. Further, a method in accordance with the present invention provides enhanced efficiency and reduced cost for constructing a pneumatic tire. Thus, the plasma treated cords and method both enhances the performance and/or manufacturing of a pneumatic tire, even though the complexities of the structure and behavior of the pneumatic tire are such that no complete and satisfactory theory has been propounded.

Overlay cord characteristics affect the other components of a pneumatic tire (i.e., overlay affects apex, carcass ply, belt, tread, etc.), leading to a number of components interrelating and interacting in such a way as to affect a group of functional properties (noise, handling, durability, comfort, high speed, and mass), resulting in a completely unpredictable and complex composite. Thus, changing even one component in a tire can lead to directly improving or degrading many functional characteristics of the tire, as well as altering the interaction between that component and many other structural components.

When the structure (i.e., twist, cord construction, etc.) of the overlay of a pneumatic tire is modified with the intent to improve one functional property of the pneumatic tire, any number of other functional properties may be unacceptably degraded. Furthermore, the interaction between the overlay and the apex, carcass ply, belt (or breaker), and tread may also unacceptably affect the functional properties of the pneumatic tire. A modification of the overlay may not even improve that one functional property because of these complex interrelationships.

Thus, the complexity of the interrelationships of the multiple components makes the actual result of modification of a tire component, in accordance with the present invention, impossible to predict or foresee from the infinite possible results. Only through extensive experimentation have the plasma treated cords of the present invention been revealed as an excellent option for a tire such as a pneumatic tire.

## Claims

1. A tire comprising a tire component (5, 6, 7) having a plurality of individually plasma treated steel cords (128) applied individually to the tire component (5, 6, 7), wherein the plasma treated steel cords (128) comprise a plasma generated deposition derived from at least one polymerizable monomer (115).

2. The tire as set forth in claim 1 wherein the tire component (5, 6, 7) is selected from the group consisting of a belt structure, a carcass, an overlay, an undertread, a tread cushion layer, or an overlay disposed radially between the tread and a breaker or between the tread and at least one carcass ply.

3. The tire as set forth in at least one of the previous claims wherein the individually plasma treated cords (128) further comprise a finish providing tack to the tire component.

4. The tire as set forth in at least one of the previous claims wherein the at least one polymerizable monomer is selected from the group consisting of isoprene, butadiene, squalene, and styrene.

5. The tire as set forth in at least one of the previous claims wherein the tire is a motorcycle tire.

6. A method of manufacturing a tire or a tire component, the method comprising the steps of:
i) atomizing a mixture of at least one polymerizable monomer (115), a halogenated hydrocarbon (117), and a carrier gas (113) to form an atomized mixture (121);
ii) generating an atmospheric pressure plasma (124) with the atomized mixture (121);
iii) exposing an individual tire cord (126) to the atmospheric pressure plasma (124) to make a plasma treated cord (128); and
iv) applying the plasma treated individual cord (128) on a surface of an uncured tire component;
wherein the plasma treated cord (128) is applied to the uncured tire component on a tire building drum, and/or wherein the plasma treated individual cord (128) is applied directly on to the tire component during a building process of an uncured pneumatic tire and wherein the individual tire cord (126) is conveyed continuously during exposure to the atmospheric pressure plasma (124).

7. The method as set forth in claim 6 wherein the uncured tire component is selected from a group consisting of a carcass, a belt structure, an overlay, an undertread or a tread cushion layer.

8. The method as set forth in at least one of the previous claims wherein the applying step occurs without calendering of the individual cord.

9. The method as set forth in at least one of the previous claims wherein the individual tire cord (126) comprises or is made from a fiber material selected from steel, aramid, PEN, PET, PVA, PBO, POK, rayon, nylon, carbon, and glass.

10. The method of at least one of the previous claims wherein the atomized mixture further comprises at least one curative.

11. The method of at least one of the previous claims wherein the halogenated hydrocarbon is selected from the group consisting of dichloromethane (methylene chloride), trichloromethane (chloroform), carbon tetrachloride, trichloroethane, chlorobutane, bromoethane, dibromomethane (methylene bromide), tribromomethane (bromoform), allyl bromide, allyl chloride, chlorinated isoprene, dichloro butene, dichloro propene, dichloro butyne, chlorobutene, 1-chloro-3-methyl-2-butene, 1-chloro-2-methylpropene, and 1-chloro-2-octyne.

12. The method of at least one of the previous claims wherein a finish is applied to the tire cords during or after a plasma process, the finish providing tack to the tire component.

13. The method of claim 6 wherein the amount of monomer ranges from 10 to 50 percent by weight and the amount of halogenated hydrocarbon ranges from 90 to 50 percent by weight of the total components in the atomized mixture on a carrier gas free basis.

## Patentansprüche

1. Reifen, umfassend ein Reifenbauteil (5, 6, 7), das eine Vielzahl individuell plasmabehandelter Stahlkorde (128) aufweist, die individuell an dem Reifenbauteil (5, 6, 7) angebracht sind, wobei die plasmabehandelten Stahlkorde (128) einen plasmaerzeugten Niederschlag umfassen, der von mindestens einem polymerisierbaren Monomer (115) abgeleitet ist.

2. Reifen, wie in Anspruch 1 dargelegt, wobei das Reifenbauteil (5, 6, 7) aus der Gruppe ausgewählt ist, bestehend aus einer Gürtelstruktur, einer Karkasse, einer Gürteldecklage, einem Protektorunterteil, einer Unterplattenlage oder einer radial zwischen der Lauffläche und einem Protektor oder zwischen der Lauffläche und mindestens einer Karkassenlage angeordneten Gürteldecklage.

3. Reifen, wie in mindestens einem der vorgenannten Ansprüche dargelegt, wobei die individuell plasmabehandelten Korde (128) weiter eine Beschichtung umfassen, die dem Reifenbauteil Klebrigkeit verleiht.

4. Reifen, wie in mindestens einem der vorgenannten Ansprüche dargelegt, wobei das mindestens eine polymerisierbare Monomer aus der aus Isopren, Butadien, Squalen und Styrol bestehenden Gruppe ausgewählt ist.

5. Reifen, wie in mindestens einem der vorgenannten Ansprüche dargelegt, wobei der Reifen ein Motorradreifen ist.

6. Verfahren zur Herstellung eines Reifens oder eines Reifenbauteils, wobei das Verfahren die folgenden Schritte umfasst:
i) Zerstäuben einer Mischung von mindestens einem polymerisierbaren Monomer (115), einem halogenierten Kohlenwasserstoff (117) und einem Trägergas (113) zur Bildung eines zerstäubten Gemischs (121);
ii) Erzeugen eines Atmosphärendruckplasmas (124) mit dem zerstäubten Gemisch (121);
iii) dem Atmosphärendruckplasma (124) Aussetzen eines individuellen Reifenkords (126), um einen plasmabehandelten Kord (128) herzustellen; und
iv) Anbringen des plasmabehandelten individuellen Kords (128) an einer Oberfläche eines unvulkanisierten Reifenbauteils;
wobei der plasmabehandelte Kord (128) an dem unvulkanisierten Reifenbauteil auf einer Reifenbautrommel angebracht wird, und/oder wobei der plasmabehandelte individuelle Kord (128) während eines Aufbauvorgangs eines unvulkanisierten Luftreifens direkt an dem Reifenbauteil angebracht wird, und wobei der individuelle Reifenkord (126) während des dem Atmosphärendruckplasma (124) Aussetzens kontinuierlich befördert wird.

7. Verfahren, wie in Anspruch 6 dargelegt, wobei das unvulkanisierte Reifenbauteil aus einer Gruppe ausgewählt wird, bestehend aus einer Karkasse, einer Gürtelstruktur, einer Gürteldecklage, einem Protektorunterteil oder einer Unterplattenlage.

8. Verfahren, wie in mindestens einem der vorgenannten Ansprüche dargelegt, wobei der Anbringungsschritt ohne Kalandern des individuellen Kords stattfindet.

9. Verfahren, wie in mindestens einem der vorgenannten Ansprüche dargelegt, wobei der individuelle Reifenkord (126) ein Fasermaterial umfasst oder daraus hergestellt ist, das aus Stahl, Aramid, PEN, PET, PVA, PBO, POK, Rayon, Nylon, Kohlenstoff und Glas ausgewählt ist.

10. Verfahren nach mindestens einem der vorgenannten Ansprüche, wobei das zerstäubte Gemisch weiter mindestens ein Vulkanisationshilfsmittel umfasst.

11. Verfahren nach mindestens einem der vorgenannten Ansprüche, wobei der halogenierte Kohlenwasserstoff aus der Gruppe ausgewählt ist, bestehend aus Dichlormethan (Methylenchlorid), Trichlormethan (Chloroform), Tetrachlorkohlenstoff, Trichlorethan, Chlorbutan, Bromethan, Dibrommethan (Methylenbromid), Tribrommethan (Bromoform), Allylbromid, Allylchlorid, chloriertem Isopren, Dichlorbuten, Dichlorpropen, Dichlorbutyn, Chlorbuten, 1-Chlor-3-methyl-2-buten, 1-Chlor-2-methylpropen und 1-Chlor-2-octyn.

12. Verfahren nach mindestens einem der vorgenannten Ansprüche, wobei eine Beschichtung während oder nach einem Plasmavorgang an den Reifenkorden angebracht wird, wobei die Beschichtung dem Reifenbauteil Klebrigkeit verleiht.

13. Verfahren nach Anspruch 6, wobei der Betrag an Monomer sich auf 10 bis 50 Gewichtsprozent beläuft und der Betrag an halogeniertem Kohlenwasserstoff sich auf 90 bis 50 Gewichtsprozent der Gesamtkomponenten in dem zerstäubten Gemisch auf einer trägergasfreien Basis beläuft.

## Revendications

1. Bandage pneumatique comprenant un composant de bandage pneumatique (5, 6, 7) possédant plusieurs câblés en acier (128) traités individuellement au plasma appliqués individuellement sur le composant de bandage pneumatique (5, 6, 7), dans lequel les câblés en acier traités au plasma (128) comprennent un dépôt généré par plasma, qui dérive d'au moins un monomère polymérisable (115).

2. Bandage pneumatique selon la revendication 1, dans lequel le composant de bandage pneumatique (5, 6, 7) est choisi parmi le groupe constitué par une structure de ceintures, une carcasse, une couche de recouvrement, une sous-couche, une couche de rembourrage pour la bande de roulement ou bien une couche de recouvrement disposée en direction radiale entre la bande de roulement et une nappe de sommet ou bien entre la bande de roulement et au moins une nappe de carcasse.

3. Bandage pneumatique selon au moins une des revendications précédentes, dans lequel les câblés en acier (128) traités individuellement au plasma comprennent une couche de finition qui procure un aspect collant au composant du bandage pneumatique.

4. Bandage pneumatique selon au moins une des revendications précédentes, dans lequel ledit au moins un monomère polymérisable est choisi parmi le groupe constitué par l'isoprène, le butadiène, le squalène et le styrène.

5. Bandage pneumatique selon au moins une des revendications précédentes, dans lequel le bandage pneumatique est un bandage pneumatique pour motocyclette.

6. Procédé de confection d'un bandage pneumatique ou d'un composant de bandage pneumatique, le procédé comprenant les étapes consistant à :
i) atomiser un mélange d'au moins un monomère polymérisable (115), d'un hydrocarbure halogéné (117) et d'un gaz porteurs (113) pour obtenir un mélange atomisé (121) ;
ii) générer un plasma sous pression atmosphérique (124) avec le mélange atomisé (121) ;
iii) exposer un câblé individuel de bandage pneumatique (126) au plasma sous pression atmosphérique (124) pour obtenir un câblé traité au plasma (128) ; et
iv) appliquer le câblé individuel (128) traité au plasma sur une surface d'un composant de bandage pneumatique à l'état non vulcanisé ;
dans lequel le câblé (128) traité au plasma est appliqué sur le composant de bandage pneumatique à l'état non vulcanisé sur un tambour de confection de bandage pneumatique et/ou dans lequel le câblé (128) traité au plasma est appliqué directement sur le composant de bandage pneumatique au cours d'un processus de confection d'un bandage pneumatique non vulcanisé, et dans lequel le câblé individuel de bandage pneumatique (126) est transporté en continu lors de son exposition au plasma sous pression atmosphérique (124).

7. Procédé selon la revendication 6, dans lequel le composant de bandage pneumatique non vulcanisé est choisi parmi le groupe constitué par une carcasse, une structure de ceintures, une couche de recouvrement, une sous-couche ou une couche de rembourrage pour la bande de roulement.

8. Procédé selon au moins une des revendications précédentes, dans lequel l'étape d'application est mise en oeuvre en l'absence de calandrage des câblés individuels.

9. Procédé selon au moins une des revendications précédentes, dans lequel le câblé de bandage pneumatique individuel (126) comprend ou est réalisé à partir d'une matière fibreuse choisie parmi l'acier, l'aramide, PEN, PET, PVA, PBO, POK, de la rayonne, du nylon, du carbone et du verre.

10. Procédé selon au moins une des revendications précédentes, dans lequel le mélange atomisé comprend en outre au moins un adjuvant de vulcanisation.

11. Procédé selon au moins une des revendications précédentes, dans lequel l'hydrocarbure halogéné est choisi parmi le groupe constitué par le dichlorométhane (chlorure de méthylène), le trichlorométhane (chloroforme), le tétrachlorure de carbone, le trichloroéthane, le chlorobutane, le bromoéthane, le dibromométhane (bromure de méthylène), le tribromométhane (bromoforme), le bromure d'allyle, le chlorure d'allyle, l'isoprène chloré, le dichlorobutène, le dichloropropène, le dichlorobutyne, le chlorobutène, le 1-chloro-3-méthyl-2-butène, le 1-chloro-2-méthylpropène et le 1-chloro-2-octyne.

12. Procédé selon au moins une des revendications précédentes, dans lequel on applique une couche de finition sur les câblés du bandage pneumatique pendant ou après le processus d'exposition au plasma, la couche de finition procurant un aspect collant au composant du bandage pneumatique.

13. Procédé selon la revendication 6, dans lequel la quantité du monomère se situe dans la plage de 10 à 50 % en poids et la quantité de l'hydrocarbure halogéné se situe dans la plage de 90 à 50 % en poids de la totalité des composants dans le mélange atomisé sur une base exempte du gaz porteur.
